# EUROPEAN PATENT APPLICATION

(11) **EP 3 660 369 A1**
(43) Date of publication of application: **03.06.2020**
(21) Application number: 19719899.7
(22) Date of filing: 09.01.2019
(51) Int. Cl.: F16K 31/04, F16K 37/00

(54) **SELF-RECALIBRATED VALVE**

(71) Applicant: Chaves García, Jordi, 08450 Llinars del Vallès, Barcelona (ES); Chaves García, Juan Miguel, 08450 Llinars del Vallès, Barcelona (ES)
(72) Inventor: Chaves García, Jordi, 08450 Llinars del Vallès, Barcelona (ES); Chaves García, Juan Miguel, 08450 Llinars del Vallès, Barcelona (ES)
(74) Representative: Capitán García, Maria Nuria
(86) International application number: PCT/ES2019/070009
(87) International publication number: WO 2020/079293

(57) **Abstract**

Self-recalibrated valve comprising a stem (1) longitudinally movable by the action of an actuator (4), and which has associated at its free end a shut-off valve member, which includes an absolute positioning encoder (2) that transmits at all times the stem position as well as the valve opening and closing points, determining the total run, wherein the opening point corresponds with the open valve position and the closing point is established from the point at which the actuator performs the maximum controlled torque based on the rotational speed of the motor and electronic means (5), which in turn comprise a first microprocessor (6), in charge of receiving the signals from the absolute encoder (2), and a second microprocessor (7) in charge of controlling and monitoring the motor, as well as means of connection with the outside.

## Description

### OBJECT OF THE INVENTION

The object of the present invention, as established by the title of the invention, is a self-recalibrated valve, that is, a valve that presents the particular feature of being able to recalibrate itself in the event of a change in the shut-off conditions.

The valve can be any among those whose principle of operation is based on the linear displacement of a stem, being able to be a diaphragm valve, a spindle seat gate valve, angle seat valve, etcetera.

The present invention is characterised, on the one hand, by the type of valve used, and on the other hand, by the technical means and the functionalities presented, such that when jointly arranged, a valve is achieved that is able to accurately and automatically close, proceeding to control the shut-off calibration.

Therefore, this invention falls within the scope of valves and more specifically, among the shut-off means used.

### BACKGROUND OF THE INVENTION

Valves are known in the prior art, being an instrument for regulating and controlling fluid or a mechanical device allowing to start, stop, or regulate the circulation (flow) of liquids or gases by means of a moving part that opens, closes, or plugs partially one or more orifices or ducts.

In general, automatic valves have associated an actuator in charge of opening and closing the valve by means of the displacement of a valve member.

It happens that by wear for example of the actuator the necessary pressure to be exerted varies, not being taken into account the change of the conditions of the valve elements, being the cause of failures, technical shutdowns, with the resulting cost that this Involves. In other words, there are no means of calibration of the shut-off conditions.

In other cases, some types of valves, such as diaphragm valves are manual, except those that are hydraulic or pneumatic, however this type of actuation also causes many faults.

Therefore, the object of this invention is to develop a valve that overcomes the said drawbacks of impossibility of readjusting or recalibrating the valve shut-off conditions over time, wherein the valve is described below and its essential characteristics are described in the first claim.

### DESCRIPTION OF THE INVENTION

The object of this invention is a self-recalibrated or self-readjustable valve, i.e., as pointed out, a valve that is able to readjust in terms of its parameters when some of the shut-off conditions vary, such readjustment not needing any human intervention whatsoever.

The valve comprises a movable stem and an absolute encoder or detection device that provides a response converting the movement into an electrical signal that can be read by some type of control device in a motion control system, such as a PLC or microprocessor.
Absolute encoders provide information about the position, angle and revolutions in type-specific angle steps. Each angle step has assigned an unambiguous code pattern

The encoder is an absolute positioning encoder that allows to know at all times the positioning of the movable stem by the action of an actuator.

At first, the conditions for valve shut-off are programmed by transmitting programmable values through a connection point (e.g. a USB port) or wirelessly.

These shut-off conditions are a certain torque value which corresponds to certain rotational revolutions of the motor.

The valve is closed with a certain torque value at which valve shut-off is desired, which as indicated corresponds to a certain speed value, of revolutions per minute.

Once valve shut-off has been reached when the motor cannot rotate further, this is detected by the microprocessor, at which point the actuator stops actuating the stem displacement motor, then proceeding to read the value of the stem position by means of the absolute encoder.

The value provided by the absolute positioning encoder becomes the reference value to be reached in each valve shut-off actuation.

If there is any modification to the conditions of the valve elements (e.g. wear of the valve member), the reading of the absolute encoder relative to the positioning of the stem varies, as well as the motor revolution values, moment at which the reference value of the positioning provided by the absolute encoder is modified, the latter becoming the reference value that is used as valid to achieve valve shut-off, that is, a recalibration of the valve by itself has been produced automatically.

If during the shut-off run and before reaching the shut-off point there is a torque increase (for example by a solid body being placed in the closure), the electronic control means decide to stop the advance of the stem, go back and try again. During the run, if it reaches a maximum torque, an alarm goes off so that the equipment does not deteriorate.

Thus, the valve itself with the associated electronic means is able to calibrate itself each time by itself without the need for human adjustments always subject to possible errors.

Except when stated otherwise, all the technical and scientific elements used in this specification have the meaning usually understood by a person skilled in the art of this invention. In practice the present invention can use processes and materials that are similar or equivalent to those described in the specification.

Throughout the description and claims the term "comprises" and the various forms thereof are not meant to exclude other techniques, additives, components or steps. A person skilled in the art will recognise that other objects, advantages and features of the invention follow in part from the description and in part from the practising of the invention.

### DESCRIPTION OF THE DRAWINGS

In order to complement the description being made and to aid towards a better comprehension of the features of the invention, according to our preferred practical embodiment, we incorporate as an integral part of said description a set of drawings that are illustrative and not limiting in nature and represent the following.

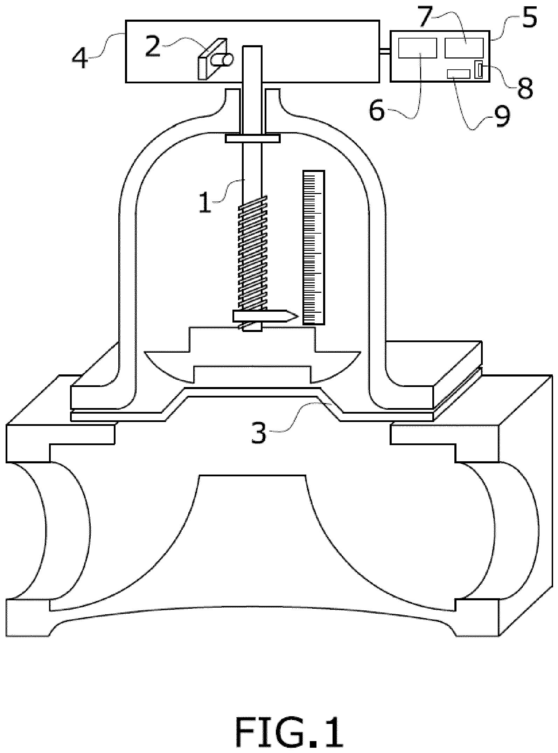

Figure 1 shows a representation of a diaphragm valve and the associated technical means required to achieve valve adjustment.

### PREFERRED EMBODIMENT OF THE INVENTION.

In view of the figures, a preferred embodiment of the proposed invention is described below.

Figure 1 shows that the valve object of the invention comprises a stem (1) longitudinally movable by the action of an actuator (4) and on the stem (1) there is associated an absolute positioning encoder (2) that allows knowing at all times the position of the stem, as well as the maximum and minimum end-of-run points, determining the total run.

This absolute encoder (2) when the valve is in open position recognises and saves said open position. It also recognises and saves the position at the point at which the actuator effects the maximum torque. The maximum torque control is carried out through the revolutions per minute (rpm) at which the motor rotates, determining when the motor must stop.

At the free end of the stem (1) a valve member is assembled that in the case represented corresponds to a diaphragm, the invention not being limited to diaphragm valves, being any of the known valves in which there is a linear displacement of a valve member, such as seat valves, angle seat valves, spindle valves, needle valves, etc.

The valve stem (1) is actuated by an actuator (4) inside which there is a motor and gear reduction means (not represented in being well known in the state of the art). Associated with the actuator (4) there are electronic monitoring and control means (5) comprising a first microprocessor (6), in charge of receiving the signals from the absolute encoder (2) that informs us of the current position of the valve, and a second microprocessor (7) in charge of controlling and monitoring the motor.

Arranged in the electronic means (5) there is also some connection means with the outside, such as a USB connection (8) as well as a means of wireless information transmission.

Once the adjustment is set (valve - actuator), the system performs a calculation of the maximum and the minimum position (open or closed) and incorporates the possibility of steering the system through an analogue signal.

Having sufficiently described the nature of the present invention and the embodiment thereof, it is noted that without departing from the essence thereof, other embodiments are possible that may differ in certain details from that given by way of example, which will also be included in the scope of protection sought, provided the main principle of the invention is not altered, changed or modified.

## Claims

1. Self-recalibrated valve comprising a stem (1) which is longitudinally movable by action of an actuator (4), and which at its free end has associated a shut-off valve member, **characterised in that** it further comprises
- an absolute positioning encoder (2) that makes it possible to know at all times the position of the stem, as well as the valve opening and closing points, determining the total run, wherein the opening point corresponds with the open valve position and the closing point is established from the point at which the actuator performs the maximum controlled torque based on the rotational speed of the motor and therefore allows the valve to self-recalibrate automatically, and
- electronic means (5) which in turn comprise
∘ a first microprocessor (6) in charge of receiving the signals from the absolute encoder (2) informing us of the current position of the valve, and
∘ a second microprocessor (7) in charge of controlling and monitoring the motor,
- and means of connection with the outside.

2. Self-recalibrated valve according to claim 1 characterised because the means of connection with the outside are any of or a combination of a USB connector (8) and Bluetooth transmission means (9).
